# EUROPEAN PATENT APPLICATION

(11) **EP 2 768 052 A1**
(43) Date of publication of application: **20.08.2014**
(21) Application number: 12839947.4
(22) Date of filing: 02.08.2012
(51) Int. Cl.: H01M 4/58

(54) **SECONDARY BATTERY AND METHOD FOR PRODUCING SAME**

(30) Priority: 14.10.2011 JP 2011227232
(71) Applicant: Toyota Jidosha Kabushiki Kaisha, Toyota-shi, Aichi 471-8571 (JP)
(72) Inventor: NOSE, Masafumi, Aichi 471-8571 (JP)
(74) Representative: TBK
(86) International application number: PCT/JP2012/069748
(87) International publication number: WO 2013/054585

(57) **Abstract**

This invention provides a secondary battery that comprises a positive electrode comprising a positive electrode active material, a negative electrode comprising a negative electrode active material, and a non-aqueous electrolyte comprising a supporting salt. The positive electrode active material is a manganese phosphate compound represented by the next general formula: NaₓMnPO₄F. Herein, x satisfies 2.02 < x ≤ 2.50. Mn may be partially substituted with one, two or more species of metal selected from Al, Mg and Ti.

## Description

### [Technical Field]

The present invention relates to a secondary battery using a fluorine-containing manganese phosphate compound as an active material.

### [Background Art]

There have been increased demands for rechargeable and reusable secondary batteries in various fields. A typical secondary battery comprises a positive electrode, a negative electrode and an electrolyte present between the two electrodes; and charging and discharging are mediated by electrolyte ions (typically cations) moving back and forth between the two electrodes. Each electrode comprises an active material that reversibly stores and releases the electrolyte ions. For example, known positive electrode active materials for lithium-ion secondary batteries include lithium transition metal oxides containing transition metals such as nickel, cobalt, etc., as major constituent metals.

On the other hand, various investigations are underway also with respect to active materials not necessarily containing nickel or cobalt. Such electrode active materials can advantageously reduce raw material costs and supply risk. For example, Patent Documents 1 and 2 disclose use of a manganese phosphate compound containing sodium ions as an active material in a secondary battery. Among these, Patent Document 1 relates to a fluorine-containing manganese phosphate compound that contains sodium ions.

### [Citation List]

### [Patent Literature]

[Patent Document 1] Japanese Patent Application Publication No. 2010-260761
[Patent Document 2] Japanese Patent Application Publication No. 2010-018472

### [Summary of Invention]

### [Technical Problem]

The present inventor found that when such a fluorine-containing manganese phosphate compound was used as a positive electrode active material, the crystallinity included defects when in a charged state (i.e. a state where Na is partially released). If the stability of the crystal structure in a charged state can be increased, such a manganese compound may have greater value as a positive electrode active material. For example, it is expected that a battery using such a material as the active material will have a larger discharge capacity (reversible capacity) and it can make a higher performance secondary battery. An objective of the present invention is thus to provide a secondary battery that offers increased battery performance, using a fluorine-containing manganese phosphate compound as an active material. Another related invention provides a method for producing a secondary battery comprising such an active material.

### [Solution to Problem]

The present invention provides a secondary battery that comprises a positive electrode comprising a positive electrode active material, a negative electrode comprising a negative electrode active material, and a non-aqueous electrolyte comprising a supporting salt. The positive electrode active material is a manganese phosphate compound represented by the following general formula (I):

NaₓMnPO₄F (I)

Herein, x satisfies 2.02 < x ≤ 2.50.

The manganese phosphate compound (a fluorine-containing phosphoric acid manganese salt) represented by the formula (I) has a Na to Mn ratio value (composition ratio) in the prescribed range. In other words, it comprises Na, which is an electrolyte ion, in a higher proportion than usual. This may allow an increase in the stability of the crystal structure relative to the charged amount (the amount of Na released), as compared to a manganese phosphate compound having a Na to Mn composition ratio of 2.0 or smaller. A secondary battery using such a manganese phosphate compound as a positive electrode active material may suffer fewer structural defects in the positive electrode active material due to charging and discharging and may provide higher performance. The positive electrode active material is preferable also in view that it primarily uses Mn, which is an abundant and inexpensive metal resource, as the transition metal to contribute to the electrochemical activity, thereby possibly reducing raw material costs and supply risk.

In a preferable embodiment, x in the general formula (I) satisfies 2.02 < x < 2.20. A secondary battery using such a manganese phosphate compound as a positive electrode active material may bring about a larger initial discharge capacity (initial reversible capacity).

A preferable manganese phosphate compound is present as plate-shaped particles that are flat in the b-axis direction. A secondary battery using such a manganese phosphate compound as a positive electrode active material can provide higher performance.

The present invention also provides a method for producing a secondary battery, with the method comprising: a step of obtaining a manganese phosphate compound represented by the general formula (I), a step of fabricating an electrode (typically a positive electrode) comprising the manganese phosphate compound, and a step of constructing a secondary battery using the electrode. With use of the manganese phosphate compound represented by the general formula (I), a secondary battery obtained by such a method may suffer fewer structural defects in the active material caused by charging and discharging, and may provide higher performance.

In a preferable embodiment, the step of obtaining the manganese phosphate compound comprises a step of preparing a starting material mixture liquid by mixing starting materials containing a sodium source, a manganese source, a phosphate source and a fluorine source in a solvent having a metal-chelating functional group (e.g. an organic solvent containing a polyol as a primary component). The metal-chelating functional group can be, for instance, at least one species of functional group selected from a group consisting of hydroxyl group, carbonyl group and ether group. It also comprises a step of heating the starting material mixture liquid to obtain a precursor. It further comprises a step of calcining the precursor at a prescribed temperature. The manganese phosphate compound thus obtained may be present as plate-shaped particles that are flat in the b-axis direction. A secondary battery using such a manganese phosphate compound as an active material may provide higher performance.

### [Brief Description of Drawings]

Fig. 1 shows a perspective view schematically illustrating the outer shape of a lithium-ion secondary battery according to an embodiment.
Fig. 2 shows a cross-sectional view taken along line II-II in Fig. 1.
Fig. 3 shows a side view schematically illustrating a vehicle (automobile) comprising a secondary battery of the present invention.
Fig. 4 shows a diagram schematically illustrating a test coin cell fabricated in worked examples.
Fig. 5 shows a chart of X-ray diffraction patterns of the respective positive electrode active material-carbon composite material according to Example 2 and Example 5 prior to initial charging.

### [Embodiments of Invention]

Preferred embodiments of the present invention are described below. Matters necessary to practice this invention other than those specifically referred to in this description may be understood as design matters based on the conventional art in the pertinent field to a person of ordinary skills in the art. The present invention can be practiced based on the contents disclosed in this description and common technical knowledge in the subject field.

The secondary battery disclosed in the present description is constituted with a manganese phosphate compound represented by the general formula (I) as a positive electrode active material. In the formula (I), x, which represents the composition ratio of Na, may meet 2.02 < x ≤ 2.50 (e.g. 2.02 < x ≤ 2.30). A fluorine-containing manganese phosphate that contains Na at such a composition ratio may form a crystal structure with space group P12₁/n1. When the composition ratio of Na is too small, the effect of increasing the crystal structure stability may not be sufficiently produced. When the composition ratio of Na is too large, the presence of excess Na as a by-product uninvolved in charging or discharging and the decreased initial crystallinity (crystallinity prior to initial charging) of the positive electrode active material may lead to lower battery performance. In a preferable embodiment, the manganese phosphate compound satisfies 2.02 < x < 2.20 (e.g. 2.05 ≤ x ≤ 2.15). A secondary battery comprising such a manganese phosphate compound may realize a larger initial discharge capacity (initial reversible capacity).

In the positive electrode active material, Mn may be partially substituted with one, two or more species of metal M' selected from Al, Mg and Ti (i.e. it can be a compound represented by a general formula (II): Naₓ(Mn,M')PO₄F). These metals show ionic radii similar to those of Mn²⁺ and Mn³⁺ when substituting on the Mn site and have strong tendencies to form the same space group P12₁/n1 as Na₂MnPO₄F, making themselves highly exchangeable for Mn. An example of an especially preferable metal M' is Al (typically present in the oxidized state of Al³⁺ when substituted on the Mn site). In an embodiment where Mn is partially substituted with M', the value of M' to Mn composition ratio (M'/Mn) may be, for example, less than 1. It is usually preferable that Mn: M' is in a range of about 0.999:0.001 to 0.9:0.1. Mn:M' is more preferably about 0.99:0.01 to 0.94:0.06, or even more preferably about 0.99:0.01 to 0.95:0.05. A secondary battery comprising such a manganese phosphate compound may realize higher initial charge/discharge efficiency (greater reversibility of charging and discharging reactions).

The following can be considered as a reason why the Na to Mn composition ratio being in the prescribed range increases the crystal structure stability when the manganese phosphate compound is used as a positive electrode active material.

It is considered that, in Na₂MnPO₄F being a positive electrode active material, when Mn²⁺ is oxidized to Mn³⁺ upon Na withdrawal during charging, the Jahn-Teller effect elongates the Mn-F bond, deforms the crystal structure, and further decomposes the Mn-F bond, thereby causing defects in the crystallinity. On the other hand, the Na-F bond is considered to have an effect of suppressing the deformation caused by the Jahn-Teller effect. Therefore, when the amount of Na withdrawn is the same, as compared to a manganese phosphate compound having a Na to Mn composition ratio of 2.0 or smaller, a manganese phosphate compound containing excess Na produces a greater effect by the Na-F bond to stabilize the crystal structure because of the greater amount of Na remaining within the crystal structure. As this increases the crystal structure stability, the discharge capacity (reversible capacity) may increase. The bond deformation (and eventual crystal structure deformation) caused by the Jahn-Teller effect is specific to fluorine-containing manganese phosphates (typically alkali metal salts; e.g. a salt containing, as the alkali metal, essentially sodium, solely lithium, or sodium and lithium at an arbitrary ratio, etc.) while it is not found in olivine-type Fe-based phosphates, layered Ni-based phosphates or Co-based phosphates.

The positive electrode active material preferably has an average particle diameter of about 0.1 µm to 3 µm (more preferably about 0.1 µm to 1 µm). In particular, a preferable material is in a plate form having a smaller dimension in the b-axis direction (i.e. being flat in the b-axis direction) in the crystal structure (typically a crystal structure represented by space group P12₁/n1). This is because Na can diffuse only in the b-axis direction within the positive electrode active material. In other words, having a smaller dimension in the b-axis direction allows Na to easily diffuse during charging and discharging, and can contribute to increased secondary battery performance (e.g. at least one increased performance, such as, reduced internal resistance, increased reversibility, etc.). The average particle diameter of the positive electrode active material refers to a value obtainable by arithmetically averaging results of scanning electron microscope (SEM) measurements of the major diameter on 20 or more particles.

With respect to the plate-shaped particles having a smaller distance in the b-axis direction, the plate-shaped particles preferably have an average thickness (which refers to a value obtainable by arithmetically averaging results of SEM measurements of the thickness on 5 or more plate-shaped particles) of about 200 nm or smaller (e.g. 50 nm to 200 nm), more preferably 100 nm or smaller (e.g. 50 nm to 100 nm), or particularly preferably 80 nm or smaller (e.g. 50 nm to 80 nm). A smaller average thickness of the plate-shaped particles may allow greater Na⁺ diffusion.

The production method of the positive electrode active material disclosed herein is not particularly limited. It is preferable to employ a production method where the growth of positive electrode active material particles can be suppressed in the b-axis direction. In a preferable production method, a reaction mixture containing respective element sources (a Mn source, a phosphate source (a P source and an O source), a Na source and a F source) as starting materials and an organic solvent capable of chelating Mn is stirred with heating. This step can be carried out, for example, in multiple separate stages. In a preferable embodiment, a Mn source is added to a Mn-chelating organic solvent, and the resultant is stirred with heating to allow sufficient chelation between Mn and the organic solvent. To this, a phosphate source is added followed by further heating and stirring. A Na source and a F source are further added while heating and stirring are continued. Subsequently, from the reaction mixture after the completion of heating and stirring, using a centrifuge or the like, the product (intermediate) is isolated, washed, allowed to dry at a suitable temperature, and then calcined at an appropriate temperature. The calcined body thus formed is pulverized and sifted to obtain a positive electrode active material having a desirable average particle diameter. When employing an embodiment where Mn is partially substituted with M', handling of an M' source shall follow the handling of the Mn source unless otherwise specified.

The respective element sources as the starting materials can be suitably selected individually according to their solubilities to the solvent used and their reactivities to each other, etc. These starting materials are not particularly limited while being capable of forming, via final calcination, a manganese phosphate compound having a desirable composition ratio; and among various salts (oxides, acetates, nitrates, ammonium salts, halides (e.g. fluorides)) or elemental metals, etc., containing the respective elements, one, two or more species can be used for each. Particularly preferable examples include manganese acetate as a Mn source, M' nitrate (e.g. aluminum nitrate) as an optional M' source, ammonium dihydrogenphosphate (NH₄H₂PO₄) as a phosphate source, and as Na sources, sodium fluoride (NaF (which is also a F source) and sodium acetate. These individual element sources can be added to the solvent as is or as aqueous solutions of them dissolved in suitable amounts of water (deionized water). The mixing ratio of these starting materials can be suitably selected so as to obtain a desirable composition ratio. The composition ratio of the resulting manganese phosphate compound is usually about the same as the mixing ratio of the respective elements available from the respective element sources.

As the organic solvent, a suitable one can be selected and used among solvents containing a Mn-chelating functional group and having a relatively high boiling point (solvents that are highly capable of coordinating to Mn). Examples of Mn-chelating functional groups include hydroxyl group (preferably alcoholic hydroxyl group), amino group, ether group, carbonyl group (amide group, etc.) and so on. Examples of particularly preferable solvents include polyols having two or more hydroxyl groups. Specific examples of such polyols include polyols such as diethylene glycol (boiling point 245 °C), ethylene glycol (boiling point 196 °C), 1,2-propanediol (boiling point 187 °C), 1,3-propanediol (boiling point 214 °C), 1,4-propanediol (boiling point 230 °C) and the like. A particularly preferable Mn-chelating solvent is diethylene glycol. A preferable example of a solvent having other functional group(s) is N,N-dimethylformamide (boiling point 153 °C) containing an amide group (a carbonyl group).

The amount of the organic solvent used can be equal to or greater than the stoichiometric amount necessary for chelation. It is usually suitable to be 20 times or more by the molar ratio (based on the functional group) to Mn. By the molar ratio (based on the functional group) to Mn, it is, for instance, preferably 20 times to 100 times, or more preferably 40 times to 60 times.

In the production method, the temperature at which the reaction mixture (the reaction system containing at least part of starting materials) is heated can be suitably set so as to eliminate counter ions (anions of a Mn source, cations of a phosphate source (a phosphate), etc.) composed of elements that are of the respective element sources contained in the mixture, but not included in the formula (I), out of the system. In usual, the heating temperature is preferably 120 °C or above, more preferably 140 °C or above, or even more preferably 180 °C or above. The upper limit of the heating temperature is preferably below the boiling point of the solvent in use. The heating time can be suitably selected according to the reactivities of starting materials. It can be usually about 8 hours to 24 hours (preferably 10 hours to 15 hours). When adding starting materials in stages as in the method described above, the heating temperature and the heating time can be suitably selected, respectively, according to the reaction progress in each stage. The heating temperature and the heating time can be different from stage to stage, respectively. The heating time can be usually set so that the total of all stages is in the range described above.

Advantages of heating the reaction mixture at the prescribed temperature include that the solvent is partially volatilized to make it easier for the product (intermediate) to precipitate out. Herein, the organic solvent coordinates Mn (and possibly M' being an optional constituent as well) on particle surfaces of the product, thus the particle growth (particularly the growth in the b-axis direction) can be suitably suppressed, resulting in formation of the intermediate as fine particles. With the solvent molecules coordinating on such intermediate particle surfaces, F is more likely to be integrated in the product (intermediate). This can prevent decomposition and loss of F in the calcining step, leading to stable formation of a manganese phosphate compound having a desirable composition ratio and crystallinity.

The calcining temperature to calcine the reaction product (intermediate) obtained as described above to form a final solid solution (calcined body) is preferably around 500 °C to 800 °C (more preferably around 550 °C to 700 °C, even more preferably around 550 °C to 650 °C; e.g. around 600 °C). When the calcining temperature (final calcination temperature) is too low, crystals are unlikely to form. When the calcining temperature is too high, due to side reactions such as decomposition, etc., the yield of the reaction product (intermediate) may decrease.

In a preferable embodiment, the calcining step is carried out in an initial calcining stage and a final calcining stage. In comparison to the temperature range described earlier, the initial calcining is preferably carried out in a lower temperature range (around 300 °C to 400 °C). The final calcining of the resulting initially-calcined body is preferably performed in the higher temperature range on the initially-calcined body which has been subjected to a necessary pulverization process or the like if any. From the standpoint of increasing the homogeneity (uniformity and crystallinity of the composition, etc.) of the positive electrode active material, it is preferable to employ the staged procedure where after initial calcining, the initially-calcined body is subjected to final calcining. The initial calcining can be carried out two or more times.

The calcining time can be set sufficient so that the intermediate forms a uniform solid solution. It can be usually about 1 hour to 10 hours (preferably about 3 hours to 6 hours, more preferably about 4 hours to 5 hours). When the calcining is carried out in stages, for example, the initial calcining time can be set for about 1 hour to 5 hours while the final calcining time can be set for about 1 hour to 5 hours. The calcining means is not particularly limited, and an electric oven or the like can be suitably used. The calcining can be carried out either in the atmosphere or under an inert gas atmosphere. From the standpoint of preventing loss of F during calcination, it is preferable to carry out the calcining under an atmosphere of an inert gas such as Ar, etc.

The secondary battery disclosed herein comprises a positive electrode comprising a manganese phosphate represented by the formula (I) as a positive electrode active material. For forming a positive electrode, the positive electrode active material can be used as is or as a composite material in combination with a conductive material.

In a preferable embodiment, the positive electrode active material is used as a composite material in combination with a conductive material. For the conductive material, in typical, various carbon materials can be used. Specific examples of carbon materials include carbon black such as acetylene black (AB), etc., carbon fibers, and the like. Such a positive electrode active material-conductive material composite material can be formed by mixing the positive electrode active material prepared as particles and a conductive material, and subjecting the mixture to a pulverization process using a suitable pulverization device (e.g. a ball mill grinder). By the pulverization process, the conductive material is pressure-joined onto particle surfaces of the positive electrode active material, forming conductive coatings on the particle surfaces. This allows formation of a positive electrode active material having greater homogeneity and conductivity. The embodiment where the positive electrode active material is used as a composite material in combination with a conductive material is advantageous in view that a mechanochemical reaction can take place due to the frictional heat generated during the pulverization process for forming the composite material and decompose residual impurities (e.g. unreacted starting materials and byproducts, etc.) formed in the production step of the positive electrode active material. The pulverization time can be suitably selected. Usually, after 10 hours or more, most impurities can be decomposed. The upper limit of the pulverization time is not particularly limited while it can be usually about 25 hours.

In a preferable embodiment, after the pulverization process, further calcining is performed on the positive electrode active material pressure-joined with the conductive material obtained by the pulverization process. According to such an embodiment, the further calcining performed after decomposition of impurities may increase the purity and homogeneity of the positive electrode active material. For example, even if the crystallinity is disrupted by the pulverization process, the further calcining can restore the crystallinity. The further calcining can be carried out in a temperature range about the same as the temperatures at which the positive electrode active material is calcined (around 500 °C to 800 °C, preferably around 550 °C to 700 °C, more preferably around 550 °C to 650 °C, e.g. around 600 °C). The time for the further calcining is not particularly limited. It can be usually about 1 hour to 10 hours (preferably about 3 hours to 6 hours, more preferably about 4 hours to 5 hours).

The non-aqueous electrolyte (typically, a non-aqueous electrolyte that is present in a liquid form at room temperature, i.e. a non-aqueous electrolyte solution) used in the secondary battery disclosed herein comprises a supporting salt in a non-aqueous solvent (an aprotic solvent). As the supporting salt, various lithium salts and sodium salts can be used. For example, can be used lithium or sodium salts of anions of lithium salts capable of working as supporting salts in electrolytes for lithium-ion batteries. Examples of preferable lithium salts include LiPF₆, LiBF₄, LiClO₄, LiAsF₆, Li(CF₃SO₂)₂N, LiCF₃SO₃ and the like. Examples of preferable sodium salts include NaPF₆, NaBF₄, NaClO₄, NaAsF₆, Na(CF₃SO₂)₂N, NaCF₃SO₃ and the like. Among these supporting salts, solely one species or a combination of two or more species can be used. Usually, it is preferable to use one, two or more species of lithium salt solely, or one, two or more species of sodium salt solely. From the standpoint of increasing the conductivity to increase the charge/discharge efficiency, it is preferable to use lithium salts having greater conductivity. An especially preferable example is LiPF₆.

In an embodiment using a lithium salt as the supporting salt, even if NaₓMnPO₄F is used as the positive electrode active material for manufacturing, because of the difference in the conductivity between Li⁺ and Na⁺, after Na withdrawal caused by charging, the species stored in the positive electrode active material during discharging is presumed to be mostly lithium. Thus, in a secondary battery in an embodiment constructed with NaₓMnPO₄F as the positive electrode active material and a lithium salt as the supporting salt, after initial charging, the positive electrode active material may have a composition where Na has been partially replaced with Li. Although it depends on the type (sodium storability) of negative electrode active material, it is considered that most of Na⁺ released from the positive electrode active material in such an embodiment are present in the non-aqueous electrolyte and are essentially uninvolved in charging or discharging from then on. Thus, in this embodiment, the non-aqueous electrolyte solution after initial charging may contain Li⁺ originating from the supporting salt and Na⁺ originating from the positive electrode active material.

The negative electrode active material in the secondary battery disclosed herein can be suitably selected according to the type of supporting salt.

In an embodiment using a lithium salt as the supporting salt, one, two or more species of negative electrode active material capable of storing and releasing lithium can be used without particular limitations. As such a negative electrode active material, materials conventionally used in lithium-ion secondary batteries can be used. Examples of preferable negative electrode active materials include pulverized carbon materials (carbon particles) containing a graphitic structure (layered structure) at least partially. Any carbon material can be preferably used among so-called graphitic substances (graphites), hard-to-graphitize carbonaceous substances (hard carbons), easy-to-graphitize carbonaceous substances (soft carbons) and substances having a structure combining these. In particular, graphite particles such as natural graphite, etc., can be preferably used. Examples of other negative electrode active materials usable in this embodiment include metallic lithium.

In an embodiment using a sodium salt as the supporting salt, one, two or more species of negative electrode active material capable of storing and releasing sodium can be used without particular limitations. Examples of such negative electrode active materials include hard carbons (sodium-storing ones) and metallic sodium, etc.

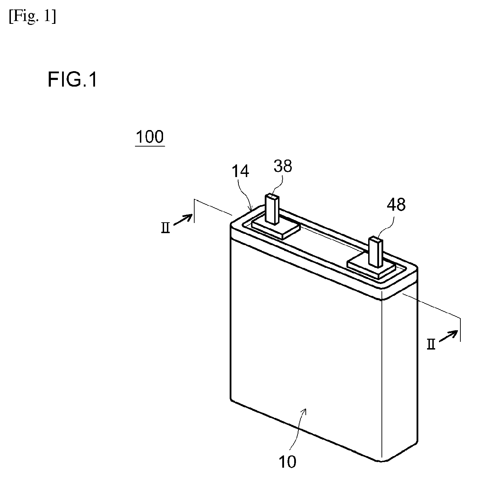

The present invention provides a secondary battery comprising a positive electrode active material disclosed herein. An embodiment of such a secondary battery is described in detail with an example of a lithium-ion secondary battery 100 (Figure 1) having a configuration where an electrode body and a non-aqueous electrolyte solution are placed in a square battery case while the art disclosed herein is not limited to such an embodiment. In other words, the shape of the secondary battery disclosed herein is not particularly limited, and the materials, shapes, sizes, etc., of components such as the battery case, electrode body, etc., can be suitably selected in accordance with its intended use and capacity. For example, the battery case may have a cubic, flattened, cylindrical, or other shape. In the following drawings, members and sites providing the same effect may be indicated by the same reference numerals, and redundant descriptions may be omitted or abbreviated. Moreover, the dimensional relationships (of length, width, thickness, etc.) in each drawing do not represent actual dimensional relationships.

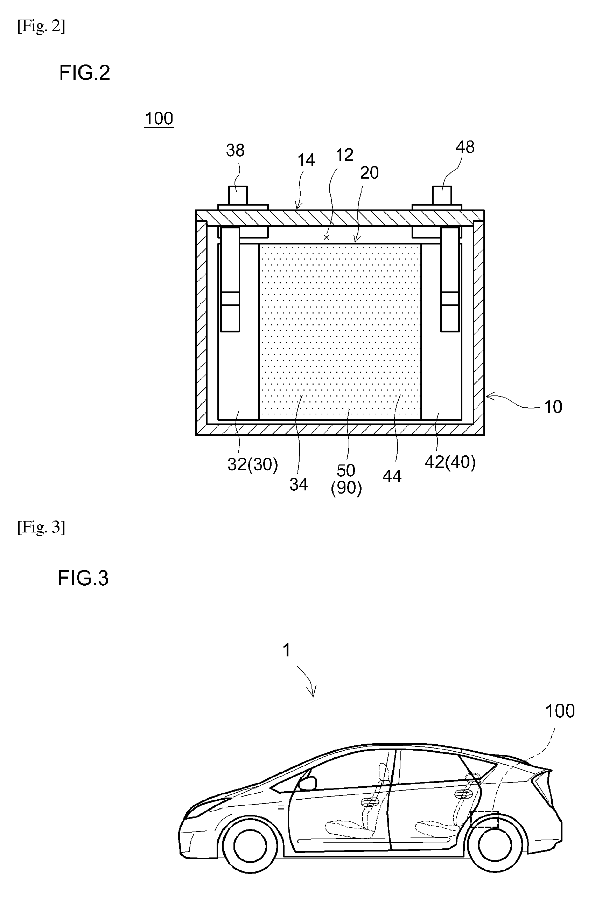

As shown in Fig. 1 and Fig. 2, a secondary battery 100 can be constructed by placing a wound electrode body 20 along with a non-aqueous electrolyte solution 90 via an opening 12 into a flat box-shaped battery case 10 suitable for the shape of the electrode body 20, and closing the opening 12 of the case 10 with a lid 14. The lid 14 has a positive terminal 38 and a negative terminal 48 for connection to the outside, with the terminals partially extending out from the surface of the lid 14.

The electrode body 20 is formed into a flattened shape by overlaying and winding up a positive electrode sheet 30 in which a positive electrode active material layer 34 is formed on the surface of a long sheet of a positive current collector 32 and a negative electrode sheet 40 in which a negative electrode active material layer 44 is formed on a long sheet of a negative current collector 42 along with two long sheets of separators 50, and laterally compressing the resulting wound body.

The positive electrode sheet 30 is formed such that the positive electrode active material layer 34 is not provided (or has been removed) on an edge along its length direction to expose the positive current collector 32. Similarly, the negative electrode sheet 40 is formed such that the negative electrode active material layer 44 is not provided (or has been removed) on an edge along its length direction to expose the negative current collector 42. The positive terminal 38 is joined to the exposed edge of the positive current collector 32 and the negative terminal 48 is joined to the exposed edge of the negative current collector 42, respectively, to form electrical connections with the positive electrode sheet 30 and the negative electrode sheet 40 of the flattened wound electrode body 20. The positive and negative terminals 38 and 48 can be joined to their respective positive and negative current collectors 32 and 42, for example, by ultrasonic welding, resistance welding, and so on.

The positive electrode sheet 30 can be preferably fabricated, for instance, by applying, to the positive current collector 32, a positive electrode paste prepared by dispersing the positive electrode active material-conductive material composite material in a suitable solvent (e.g. a non-aqueous solvent such as N-methylpyrrolidone (NMP), etc.) along with a binder and a supplemental conductive material used as necessary (which can be a material of the same kind or a different kind as the conductive material contained in the composite material); and allowing the composition to dry. Alternatively, in place of the positive electrode paste, can be used a positive electrode paste prepared by dispersing the positive electrode active material as is (without forming the composite material) in a suitable solvent along with a conductive material and a binder. The amount of the positive electrode active material contained in the positive electrode active material layer 34 can be about 50 to 98 % by mass (typically 55 to 95 % by mass, preferably 60 to 95 % by mass, more preferably 70 to 90 % by mass). The amount of the conductive material contained in the positive electrode active material layer 34 (when the positive electrode active material-conductive material composite material is used, the total amount of the conductive material contained in the composite material and any supplemental conductive material used as necessary) can be, for instance, about 1 to 40 % by mass (typically 5 to 40 % by mass, preferably 5 to 35 % by mass, more preferably 5 to 30 % by mass, e.g. 10 to 25 % by mass).

As the binder for forming the positive electrode, a suitable one can be selected and used from various polymers. One species may be used solely, or two or more species may be used in combination. Examples include oil-soluble polymers such as polyvinylidene fluoride (PVDF), polyvinylidene chloride (PVDC), etc.; water-soluble polymers such as carboxymethyl cellulose (CMC), polyvinyl alcohol (PVA), etc.; water-dispersible polymers such as polytetrafluoroethylene (PTFE), vinyl acetate copolymers, styrene-butadiene rubber (SBR), etc.; and the like. The amount of the binder contained in the positive electrode active material layer 34 can be suitably selected. For example, it can be about 1 to 10 % by mass.

As the positive current collector 32, can be preferably used a conductive material formed of a metal having good conductivity. For example, can be used aluminum or an alloy containing aluminum as the primary component. The shape of the positive current collector 32 is not particularly limited as it may vary in accordance with the shape, etc., of the secondary battery, and it may have a variety of shapes such as a rod, plate, sheet, foil, mesh, and so on. In a secondary battery 100 comprising a wound electrode body 20 as in the present embodiment, a positive current collector 32 made of an aluminum sheet (e.g. an aluminum sheet having a thickness of about 10 µm to 30 µm) can be preferably used.

The negative electrode sheet 40 can be preferably fabricated, for instance, by applying, to the negative current collector 42, a negative electrode paste prepared by dispersing a negative electrode active material suitably selected as described above in a suitable solvent along with a binder, etc., as necessary; and allowing the composition to dry. The amount of the negative electrode active material contained in the negative electrode active material layer 44 can be suitably selected. For example, it can be about 90 to 99.5 % by mass.

As the binder for forming the negative electrode, can be used solely one species, or a mixture of two or more species among materials similar to those listed for forming the positive electrode. The amount of the binder contained in the negative electrode active material layer 44 can be suitably selected. For example, it can be about 0.5 to 10 % by mass.

As the negative current collector 42, can be preferably used a conductive material formed of a metal having good conductivity. For instance, copper or an alloy containing copper as the primary component can be used. The shape of the negative current collector 42 is not particularly limited as it may vary in accordance with the shape, etc., of the secondary battery, and it may have a variety of shapes such as a rod, plate, sheet, foil, mesh, and so on. In a secondary battery 100 comprising a wound electrode body 20 as in the present embodiment, a negative current collector 42 made of a copper sheet (a copper sheet having a thickness of about 6 µm to 30 µm) can be preferably used.

The non-aqueous electrolyte solution 90 can be prepared by dissolving the suitably selected supporting salt (supporting electrolyte) in a non-aqueous solvent. As the non-aqueous solvent, a suitable one can be selected and used from solvents used in general secondary batteries. Examples of especially preferable non-aqueous solvents include carbonates such as ethylene carbonate (EC), dimethyl carbonate (DMC), ethyl methyl carbonate (EMC), diethyl carbonate (DEC), vinylene carbonate (VC), propylene carbonate (PC), and so on. Among these non-aqueous solvents, solely one species or a mixture of two or more species can be used. For example, a solvent mixture of EC, DMC, and EMC can be preferably used. The supporting salt concentration of the non-aqueous electrolyte solution 90 is preferably in a range of, for instance, about 0.7 mol/L to 1.3 mol/L.

The separator 50 is a layer present between the positive electrode sheet 30 and the negative electrode 40, which is typically formed in a sheet and positioned so as to be in contact with both the positive electrode active material layer 34 of the positive electrode sheet 30 and the negative electrode active material layer 44 of the negative electrode sheet 40. It functions to prevent a short circuit associated with direct contact between the two electrode active material layers 34 and 44 on the positive electrode sheet 30 and the negative electrode sheet 40. It also functions to form conductive paths (conductive pathways) between the electrodes, with the pores of the separator 50 having been impregnated with the electrolyte solution. As such a separator 50, a conventional separator can be used without particular limitations. For example, a porous sheet of a resin (microporous resin sheet) such as polyethylene (PE), polypropylene (PP), polystyrene, etc., can be preferably used. A porous polyolefin-based resin sheet formed of a polyolefin-based resin such as PE, PP, etc., is preferable. In particular, can be used preferably a PE sheet, a PP sheet, a multi-layer sheet having overlaid PE and PP layers (e.g. a PP/PE/PP three-layer sheet), or the like. The thickness of the separator is preferably set within a range of about 10 µm to 40 µm, for example.

As described above, since a secondary battery disclosed herein has a constitution that comprises, as a positive electrode active material, a manganese phosphate compound comprising abundant Mn as the primary transition metal, it can be preferably employed as a large-capacity battery for vehicles and the like, about which costs are of more importance. Thus, as shown in Fig. 3, the present invention provides a vehicle 1 comprising a secondary battery 100 disclosed herein. In particular, a preferable vehicle (e.g. an automobile) comprises such a secondary battery as a driving power supply (typically, a driving power supply in a hybrid vehicle or an electric vehicle).

Several embodiments relevant to the present invention are described below although this is not to limit the present invention to these specific examples. In the following description, the terms "parts" and "%" are based on the mass unless specifically stated otherwise.

### «Preparation of positive electrode active material-conductive material composite materials and construction of test half-cells»

### <Example 1>

In 20 mL of deionized water, was dissolved 7.279 g (30 mmol) of manganese acetate tetrahydrate ((CH₃COO)₂Mn•4H₂O) as a Mn source. The resultant was placed into a suitable stirring device along with 160 mL of diethylene glycol (a polyol solvent) and stirred at 180 °C for one hour. To the reaction mixture which had turned brown and contained some precipitate, was added an aqueous solution prepared by dissolving 3.4509 g (30 mmol) of ammonium dihydrogenphosphate (NH₄H₂PO₄) as a phosphate source in 20 mL of deionized water. The resulting mixture was further stirred at 180 °C for three hours. To the reaction mixture containing some white powdery precipitate, was further added an aqueous solution prepared by dissolving in 60 mL of deionized water 1.26 g (30 mmol) of sodium fluoride (NaF) as a Na source and a F source as well as 2.46 g (30 mmol) of sodium acetate as another Na source. The resultant was further stirred at 180 °C for 15 hours. From this reaction mixture, the product (intermediate) was isolated using a centrifuge and allowed to dry at 180 °C. Under an Ar atmosphere, this was initially calcined at 300 °C for three hours. The resulting initially-calcined body was crushed and then further subjected to final calcining at 600 °C for five hours to obtain a fluorine-containing manganese phosphate compound having a Mn to Na composition ratio Mn:Na of 1.0:2.0.

When the resulting fluorine-containing manganese phosphate compound was observed by SEM, it was confirmed to be present as plate-shaped particles. The plate-shaped particles had an average thickness of 90 nm (number of particles measured: 5) and an average particle diameter of 1 µm (number of particles measured: 20).

The fluorine-containing manganese phosphate compound (positive electrode active material) obtained above was placed in a ball mill grinder and pulverized for three hours. To this, was added carbon black as a carbon material (conductive material) so that the positive electrode active material to carbon material ratio was 80:20. The resulting mixture was further pulverized for 21 hours to obtain composite powder wherein the carbon material had been pressure-joined on particle surfaces of the positive electrode active material. The composite powder was calcined under an argon atmosphere at 600 °C for five hours and the resulting calcined body was pulverized to obtain a positive electrode active material-carbon composite material having an average particle diameter of 0.2 µm (number of particles measured: 20). From SEM observations of the composite material, it was confirmed that the particles remained to have the plate-shaped form.

The composite material, acetylene black as an auxiliary conductive material (supplemental conductive material) and PVDF as a binder were dispersed and compounded in NMP so that their ratio was 75:20:5 to obtain a positive electrode paste. The positive electrode paste was applied to one face of a long strip of 15 µm thick aluminum foil and rolled after dried to obtain a positive electrode sheet having a theoretical capacity (capacity measured when both of two Na⁺ ions contained in each composition formula were released) of 250 mAh/g.

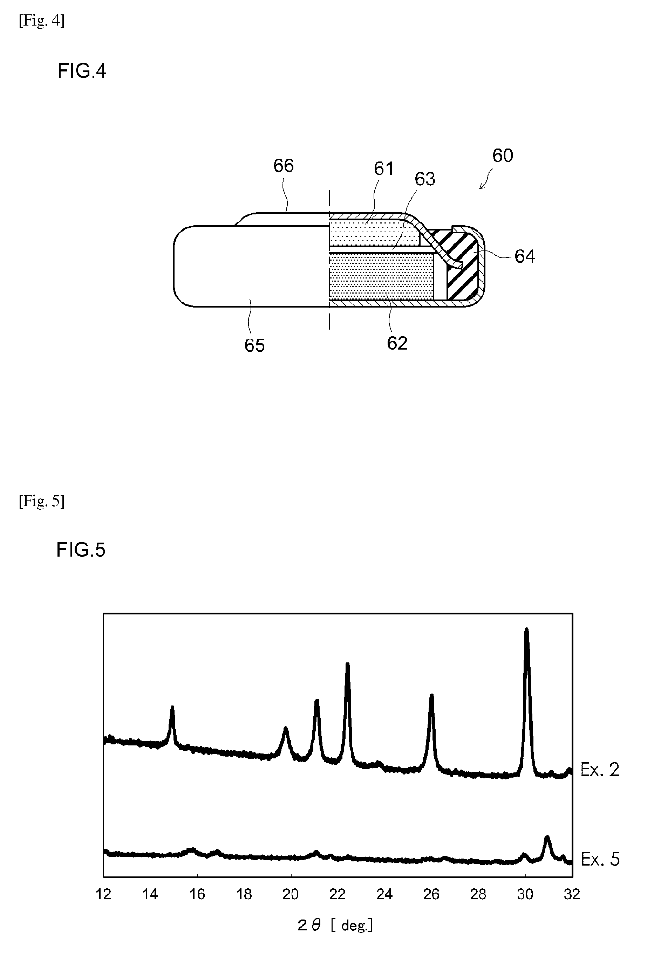

The positive electrode sheet (working electrode) cut to a circle of 16 mm diameter, metallic lithium foil (19 mm diameter, 0.02 mm thick) as a negative electrode (counter electrode) and a separator (22 mm diameter, 0.02 mm thick, a PP/PE/PP three-layer porous sheet) were set in a stainless steel container along with a non-aqueous electrolyte solution to construct a 2032 (20 mm diameter, 3.2 mm thick) test coin cell 60 having a constitution outlined in Fig. 4. In Fig. 4, reference sign 61 denotes the positive electrode (working electrode), reference sign 62 denotes the negative electrode (counter electrode), reference sign 63 denotes the separator impregnated with the electrolyte solution, reference sign 64 denotes a gasket, reference sign 65 denotes the container (negative terminal), and reference sign 66 denotes a lid (positive terminal). As the non-aqueous electrolyte solution, a 1 mol/L LiPF₆ solution (EC:DMC:EMC = 3:4:3 solvent mixture) was used.

### <Example 2>

In the same manner as Example 1 except that the amount of sodium acetate used was modified to 2.71 g (33 mmol), was obtained a fluorine-containing manganese phosphate compound having a Mn to Na composition ratio Mn:Na of 1.0:2.1. SEM observations of this compound confirmed that it was present as plate-shaped particles having an average particle diameter of 0.9 µm and an average thickness of 80 nm. In the same manner as Example 1 except that this was used as the positive electrode active material, a test coin cell according to the present example was constructed.

### <Example 3>

In the same manner as Example 1 except that the amount of sodium acetate used was modified to 2.95 g (36 mmol), was obtained a fluorine-containing manganese phosphate compound having a Mn to Na composition ratio Mn:Na of 1.0:2.2. SEM observations of this compound confirmed that it was present as plate-shaped particles having an average particle diameter of 0.9 µm and an average thickness of 90 nm. In the same manner as Example 1 except that this was used as the positive electrode active material, a test coin cell according to the present example was constructed.

### <Example 4>

In the same manner as Example 1 except that the amount of sodium acetate used was modified to 1.97 g (24 mmol), was obtained a fluorine-containing manganese phosphate compound having a Mn to Na composition ratio Mn:Na of 1.0:1.8. SEM observations of this compound confirmed that it was present as plate-shaped particles having an average particle diameter of 0.8 µm and an average thickness of 90 nm. In the same manner as Example 1 except that this was used as the positive electrode active material, a test coin cell according to the present example was constructed.

### <Example 5>

In the same manner as Example 1 except that the amount of sodium acetate used was modified to 4.92 g (60 mmol), was obtained a fluorine-containing manganese phosphate compound having a Mn to Na composition ratio Mn:Na of 1.0:3.0. In the same manner as Example 1 except that this was used as the positive electrode active material, a test coin cell according to the present example was constructed.

### «Evaluation of crystallinity of positive electrode active materials»

A sample (before initial charging) of the positive electrode active material-conductive material composite material according to each example was subjected to X-ray diffraction pattern measurement, using an X-ray diffractometer (available from Rigaku Corporation, model name "ULTIMA IV"). By analysis of the X-ray diffraction chart obtained, the presence of a diffraction peak corresponding to Na₂MnPO₄F was clearly confirmed with respect to each of Examples 1 to 4. On the other hand, in Example 5, a significantly weaker diffraction peak was observed for Na₂MnPO₄F. These results indicate that the positive electrode active material according to Example 5 had already a significantly lower degree of crystallinity (did not form a crystal structure with space group P12₁/n1) before initial charging. The diffraction patterns of Example 2 and Example 5 are shown in Fig. 5. The vertical axis in the chart is not to show the diffraction intensity.

### <<Measurement of discharge capacities»

In an environment at a temperature of 60 °C, each coin cell constructed for this measurement was charged at a rate of 1/20 C (1C is the current value that allows a full charge in one hour) to a voltage across the two terminals of 4.6 V Subsequently, at the same rate, it was discharged to a voltage across the two terminals of 3.0 V while the discharge capacity (mAh/g) was measured. The results are shown in Table 1.

[Table 1]

**Table 1**

| Ex. | Positive electrode active material | | Discharge capacity (mAh/g) |
|---|---|---|---|
| | Mn | Na | |
| 1 | 1.0 | 2.0 | 88 |
| 2 | 1.0 | 2.1 | 97 |
| 3 | 1.0 | 2.2 | 84 |
| 4 | 1.0 | 1.8 | 68 |
| 5 | 1.0 | 3.0 | 28 |

As shown in Table 1, Example 2 using, as the positive electrode active material, a manganese phosphate compound having a Na composition ratio x of 2.1 exhibited a significantly larger discharge capacity when compared to Examples 1 and 4 wherein x was 2.0 or smaller. While Example 3 wherein x was 2.2 exhibited a clearly larger discharge capacity when compared to Example 4 wherein x was 1.8, it resulted in a somewhat lower discharge capacity under the measurement conditions when compared to Example 1 wherein x was 2.0. It is considered that this occurred as part of excess Na was present as a by-product uninvolved in charging or discharging and caused an increase in the resistance, etc., whereby partially cancelling the effect of increasing the battery performance through increasing the stability of the crystal structure.

It is considered that in Example 5 wherein x was 3.0, as evident from the results of crystallinity evaluation, the positive electrode active material had already had a low degree of crystallinity before initial charging; and therefore, the excess Na contained as a by-product caused a significant decrease in the discharge capacity.

Although the present invention have been described in detail above, the embodiments described above are merely examples, and the art disclosed herein includes various modifications and changes made to the specific examples illustrated above.

### [Reference Signs List]

1: vehicle
20: wound electrode body
30: positive electrode sheet
32: positive current collector
34: positive electrode active material layer
38: positive terminal
40: negative electrode sheet
42: negative current collector
44: negative electrode active material
48: negative terminal
50: separator
60: coin cell
90: non-aqueous electrolyte solution
100: secondary battery

## Claims

1. A secondary battery comprising:
a positive electrode comprising a positive electrode active material,
a negative electrode comprising a negative electrode active material, and
a non-aqueous electrolyte comprising a supporting salt;
with the battery being constructed using, as the positive electrode active material, a manganese phosphate compound represented by the following general formula (I):
NaₓMnPO₄F (I)
(wherein x satisfies 2.02 < x ≤ 2.50, and Mn may be partially substituted with one, two or more species of metal selected from Al, Mg and Ti).

2. A secondary battery comprising:
a positive electrode comprising a positive electrode active material,
a negative electrode comprising a negative electrode active material, and
a non-aqueous electrolyte comprising a supporting salt;
with the battery being constructed using, as the positive electrode active material, a manganese phosphate compound represented by the following general formula (I):
NaₓMnPO₄F (I)
(wherein x satisfies 2.02 < x ≤ 2.50).

3. The secondary battery according to Claim 1 or 2, wherein x in the general formula (I) satisfies 2.02 < x < 2.20.

4. The secondary battery according to any one of Claims 1 to 3, wherein the manganese phosphate compound is present as plate-shaped particles that are flat in their b-axis direction.

5. A method for producing a secondary battery comprising the steps of:
obtaining a manganese phosphate compound represented by the general formula (I):
NaₓMnPO₄F (I)
(wherein x satisfies 2.02 < x ≤ 2.50, and Mn may be partially substituted with one, two or more species of metal selected from Al, Mg and Ti);
fabricating an electrode comprising the manganese phosphate compound; and
constructing a secondary battery using the electrode.

6. A method for producing a secondary battery comprising the steps of:
obtaining a manganese phosphate compound represented by the general formula (I):
NaₓMnPO₄F (I)
(wherein x satisfies 2.02 < x ≤ 2.50);
fabricating an electrode comprising the manganese phosphate compound; and
constructing a secondary battery using the electrode.

7. The method according to Claim 5 or 6, wherein the step of obtaining the manganese phosphate compound comprises the steps of:
preparing a starting material mixture liquid by mixing starting materials containing a sodium source, a manganese source, a phosphate source and a fluorine source in a solvent having a metal-chelating functional group;
heating the starting material mixture liquid to obtain a precursor; and
calcining the precursor at a prescribed temperature.

8. The method according to Claim 7, wherein the metal-chelating functional group is at least one species of functional group selected from a group consisting of hydroxyl group, carbonyl group and ether group.

9. The method according to Claim 7 or 8, wherein the solvent is a polyol solvent.
